# EUROPÄISCHE PATENTANMELDUNG

(11) **EP 2 159 267 A1**
(43) Veröffentlichungstag der Anmeldung: **03.03.2010**
(21) Anmeldenummer: 09168898.6
(22) Anmeldetag: 28.08.2009
(51) Int. Cl.: C09D 5/24, C09D 201/00, H01B 1/00

(54) **Leitfähiges Anstrichmittel**

(30) Priorität: 29.08.2008 DE 102008044932
(71) Anmelder: Brillux GmbH & Co. KG, 48163 Münster (DE)
(72) Erfinder: Höwische, Thorsten, 53948 Lüdinghausen (DE); Stach, Dirk, 45768 Marl (DE); Kugel, Manfred, 48653 Coesfeld (DE)
(74) Vertreter: Kuhn, Daniela

(57) **Zusammenfassung**

Die Erfindung betrifft ein Anstrichmittel zur Herstellung einer Flächenheizung, wobei das Anstrichmittel kristallines Graphit enthält.

## Beschreibung

Die Erfindung betrifft ein Anstrichmittel zur Herstellung einer Flächenheizung. Die Erfindung betrifft ferner ein flächiges Heizelement, das das erfindungsgemäße Anstrichmittel enthält sowie ein Verfahren zur Herstellung eines solchen Heizelements.

Anstrichmittel der eingangs genannten Art sowie ihre Verwendung als Heizelement sind grundsätzlich bekannt. So beschreibt die DE 36 36 534 einen Widerstandswerkstoff für elektrische Widerstände, der amorphes Graphit, Polyvinylacetat, denaturierten Alkohol und Koresilin als Verdünnungsmittel enthält. Der Widerstandswerkstoff wird in Form einer Anstrichfarbe oder Paste auf eine isolierende Basis oder auf Wände von geheizten Räumen aufgetragen. Nachteilig an dem Einsatz des hier beschriebenen Widerstandswerkstoffs als Heizelement ist jedoch, dass er einen hohen elektrischen Widerstand aufweist. Dies führt dazu, dass hohe Spannungen angelegt werden müssen, um die für eine akzeptable Heizwirkung erforderliche Stromstärke zu erzielen.

Die DE 694 27 141 T2 beschreibt einen flüssigen oder pastösen leitfähigen Stoff, der einen mineralischen Träger, umhüllt von einem Pulver auf Basis eines metallischen Doppeloxids von Germanium, Zinn, Blei, Arsen, Antimon und Wismut, enthält. Dieser Stoff kann ebenfalls als Flächenheizung eingesetzt werden. Die Verwendung der genannten metallischen Doppeloxide als leitfähige Komponente in der Flächenheizung ist jedoch aufgrund ihres Schwermetallgehalts aus ökologischer Sicht problematisch. Außerdem weisen die eingesetzten metallischen Doppeloxide ein hohes spezifisches Gewicht auf, was die Verarbeitung des leitfähigen Stoffs erschwert.

Ferner sind Anstrichmittel bekannt, die Graphit als leitfähigen Füllstoff enthalten. Die in ihnen enthaltene Graphitmenge beträgt ungefähr 3 Gew.%. Aufgrund ihres geringen Gehalts an Graphit sind derartige Anstrichmittel jedoch nicht elektrisch leitfähig. Die Einarbeitung dieser Füllstoffe ist vielmehr lediglich dazu bestimmt, ihre elektrostatischen Eigenschaften zu beeinflussen.

Bekannt ist außerdem der Einsatz von Graphit enthaltenden Heizfolien, die als Flächenheizung verwendet werden können. Nachteilig an der Verwendung solcher Folien ist jedoch, dass ihre Abmessungen nicht flexibel an die jeweiligen räumlichen Gegebenheiten angepasst werden können. Darüber hinaus ist das Befestigen solcher Folien aufwändig und aus ökologischer Sicht von Nachteil, da oft Lösungsmittel enthaltende Klebstoffe verwendet werden. Aufgrund ihres hohen Raumbedarfs ist außerdem sowohl Lagerung als auch Transport dieser Folien mit einem hohen logistischen Aufwand verbunden.

Der vorliegenden Erfindung lag die Aufgabe zugrunde, ein Anstrichmittel der eingangs genannten Art bereitzustellen, das die vorgenannten Nachteile nicht aufweist.

Diese Aufgabe wird gelöst durch ein Anstrichmittel zur Herstellung einer Flächenheizung, wobei das Anstrichmittel kristallines Graphit enthält.

Unter dem Begriff "kristallines Graphit" wird erfindungsgemäß Graphit verstanden, das in einer Raman-spektroskopischen Untersuchung ein Intensitätsverhältnis der D1-Bande zur G-Bande von weniger oder gleich 1 aufweist.

Während die Intensität der einzelnen Banden bei der spektroskopischen Untersuchung durch Parameter wie Feuchtigkeit und Verunreinigungen beeinflusst werden kann, wird das Intensitätsverhältnis der D1-Bande zur G-Bande von Graphit ausschließlich durch dessen Kristallinitätsgrad festgelegt.

Unter dem Begriff "Intensität" wird erfindungsgemäß die Fläche verstanden, die der jeweiligen Bande im Raman-Spektrum des untersuchten Graphits zuzuordnen ist. Die Bestimmung des Intensitätsverhältnisses der D1-Bande zur G-Bande ist ein gängiges Verfahren zur Festlegung der Kristallinität von Graphit. Dieses Verfahren ist beispielsweise beschrieben in "Structural characterization of kerogens to granulite-facies graphite: Applicability of Raman microprobe spectroscopy", American Mineralogist, Band 78, Seiten 533-557, 1993 von Brigitte Wopenka und Jill Dill Pasteris sowie in "Graphitization in a high-pressure, low temperature metamorphic gradient: a Raman microspectroscopy and HRTEMS study" von Beyssac O., Rouzand J.N., Goffé B., Brunet F. und Chopin L., Contribution to Mineralogie and Petrology, 143, Seiten 19 bis 31, 2002. Der Inhalt dieser Dokumente wird hiermit zur Bestimmung der Kristallinität von Graphit ausdrücklich in Bezug genommen.

Amorphes Graphit zeigt üblicherweise Intensitätsverhältnisse der D1-Bande zu der G-Bande zwischen 1 und 2,6. Dagegen weist kristallines Graphit geringere Intensitätsverhältnisse von D1-Bande zu G-Bande auf.

Das in dem erfindungsgemäßen Anstrichmittel enthaltene kristalline Graphit zeichnet sich ferner vorzugsweise dadurch aus, dass es einen Kohlenstoffgehalt von mehr als 80 Gew.% bis 100 Gew.%, vorzugsweise von 85 Gew.% bis 100 Gew.% aufweist. Als erfindungsgemäß besonders geeignet hat sich der Einsatz von Graphit mit einem Kohlenstoffgehalt von 90 Gew.% bis 100 Gew.% und insbesondere von 96 Gew.% bis 100 Gew.% erwiesen. Je höher der Kohlenstoffgehalt des kristallinen Graphits ist, desto größer ist dessen Leitfähigkeit und somit auch die des erfindungsgemäßen Anstrichmittels. Die Verwendung eines Anstrichmittels mit einer hohen Leitfähigkeit hat den Vorteil, dass auch bei geringen Spannungen hohe Stromstärken und somit eine ausreichende Wärmeleistung erzielt werden kann.

Überraschend wurde gefunden, dass Anstrichmittel, die kristallines Graphit enthalten, eine deutlich höhere Leitfähigkeit als Anstrichmittel aufweisen, die eine vergleichbare Menge an amorphem Graphit enthalten. Somit eignet sich das erfindungsgemäße Anstrichmittel hervorragend für die Herstellung von Flächenheizungen. Diese zeichnen sich insbesondere über einen hohen Wirkungsgrad aus. So kann mit erfindungsgemäßen Flächenheizungen bereits bei niedrigen Spannungen eine überraschend hohe Wärmeleistung erzielt werden. Besonders gute Ergebnisse werden bei Verwendung von kristallinem Graphit mit einem Intensitätsverhältnis der D1-Bande zu G-Bande von 0,01 bis 0,8, noch bevorzugter von 0,05 bis 0,6 und insbesondere von 0,1 bis 0,3 erzielt.

Ein weiterer Vorteil des erfindungsgemäßen Anstrichmittels besteht darin, dass die Menge, in der das kristalline Graphit in dem Anstrichmittel enthalten ist, gering gehalten werden kann und dennoch zufriedenstellende Wärmeleistungen erhalten werden.

Grundsätzlich kann die Menge des kristallinen Graphits in dem Anstrichmittel je nach Anwendung in weiten Bereichen variiert werden. Die für den jeweiligen Anwendungszweck geeignete Menge an Graphit richtet sich ferner nach der angelegten Versorgungsspannung. Bei der Einstellung des Graphitanteils ist ferner zu beachten, dass die Viskosität des Anstrichmittels mit steigendem Anteil an Graphit zunimmt, was dessen Verarbeitbarkeit erschwert. Praktische Versuche haben ergeben, dass im Allgemeinen eine besonders große Wärmeleistung erhalten wird, wenn sich der Gehalt an kristallinem Graphit in dem Anstrichmittel in einem Bereich von 1 bis 80 Gew.%, vorzugsweise 10 bis 60 Gew.%, noch bevorzugter 20 bis 50 Gew.% und insbesondere 30 bis 40 Gew.%, jeweils bezogen auf das Gesamtgewicht des Anstrichmittels, bewegt.

In dem erfindungsgemäßen Anstrichmittel kann kristallines Graphit mit den verschiedensten Kornverteilungen eingesetzt werden. Praktische Versuche haben gezeigt, dass bei der Verwendung von kristallinem Graphit mit einer Kornverteilung von bis zu 600 µm besonders gute Ergebnisse erzielt werden. Besonders vorteilhaft ist es ferner, wenn kristallines Graphit mit kleinen Partikelgrößen eingesetzt wird. Hierbei hat sich insbesondere kristallines Graphit mit einer Korngrößenverteilung D95 von 0,1 bis 80 µm, vorzugsweise 1 bis 70 µm und insbesondere 1 bis 60 µm, als besonders geeignet erwiesen. Der Einsatz eines derart feinen Graphits hat den Vorteil, dass es im Anstrichmittel besonders gut dispergierbar ist.

Bei der Auswahl des für den jeweiligen Anwendungszweck geeigneten Anteils an Graphit ist ferner zu berücksichtigen, dass sich mit steigendem Gehalt an Graphit auch die Viskosität des Anstrichmittels erhöht. Somit kann durch Variierung des Anteils an kristallinem Graphit nicht nur die mit dem erfindungsgemäßen Anstrichmittel erzeugbare Wärmeleistung, sondern auch dessen Viskosität gesteuert werden.

Unter Berücksichtung der üblicherweise eingesetzten Versorgungsspannungen hat es sich im Hinblick auf die erzielbare Wärmeleistung als günstig erwiesen, wenn der spezifische Widerstand des Anstrichmittels 0,0005 bis 5 Ω x m, vorzugsweise 0,005 bis 3 Ω x m, noch bevorzugter 0,05 bis 1 Ω x m beträgt. Bei diesen Werten kann bei einer Speisespannung von 5 V bis zu 240 V eine Heizleistung von etwa 100 W/m² erreicht werden. Die Größe des spezifischen Widerstands kann beispielsweise durch Anteil und Kristallinitätsgrad des verwendeten Graphits und/oder durch gezielten Zusatz weiterer Komponenten eingestellt werden.

Bei der Auswahl weiter Komponenten für das erfindungsgemäße Anstrichmittel ist zu beachten, dass diese je nach Einsatzgebiet der mit dem Anstrichmittel hergestellten Flächenheizung mehr oder weniger temperaturbeständig sein sollten. Derartige weitere Komponenten können grundsätzlich elektrisch ableitfähig oder isolierend sein. Praktische Versuche haben gezeigt, dass Kohlenstofffasern und Carbon-Nano-Tubes besonders geeignete weitere Komponenten für das erfindungsgemäße Anstrichmittel sind. Kohlenstofffasern sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen:
isotrope Fasern besitzen nur geringe Festigkeiten, anisotrope Fasern zeigen hohe Festigkeiten und Steifigkeiten bei gleichzeitig geringer Bruchdehnung. Aus diesem Grund wird erfindungsgemäß der Einsatz von anisotropen Kohlenstofffasern bevorzugt.

Eine Kohlenstoff-Faser hat üblicherweise einen Durchmesser von etwa 5-8 Mikrometer. Gewöhnlich werden 1000 bis 24000 Einzelfasern (Filamente) zu einem Bündel (Roving) zusammengefasst, das auf Spulen gewickelt wird. Neben diesen Niederfilament-Typen gibt es auch sogenannte HeavyTow-Typen mit 120000 bis 400000 Einzelfasern. Kohlenstofffasern zeichnen sich insbesondere durch ihre hohe elektrische und thermische Leitfähigkeit aus. Erfindungsgemäß bevorzugt ist der Einsatz von Filamentgarn, Kurzschnitt oder gemahlenen Fasern.

Unter Carbon-Nano-Tubes werden kubusförmige Moleküle aus nahezu reinem Kohlenstoff verstanden. Carbon-Nano-Tubes weisen üblicherweise 1 bis 3 nm im Durchmesser auf und sind 100 bis 1000 nm lang. Carbon-Nano-Tubes zeichnen sich insbesondere dadurch aus, dass sie bei einem äußerst geringen spezifischen Gewicht eine ausgesprochen hohe elektrische Leitfähigkeit sowie eine große Wärmeleitfähigkeit aufweisen.

Die Menge, in der die Kohlenstofffasern und/oder Carbon-Nano-Tubes vorteilhafterweise in dem Anstrichmittel vorhanden sind, hängt von den angestrebten Viskositäten bzw. spezifischen Widerstandswerten des Anstrichmittels ab. Als für die praktische Anwendung üblicherweise besonders geeignet hat sich erwiesen, wenn das Anstrichmittel Kohlenstofffasern und/oder Carbon-Nano-Tubes in einer Menge von bis zu 10 Gew.%, vorzugsweise von 0,1 bis 5 Gew.% und insbesondere von 0,5 bis 1 Gew.%, jeweils bezogen auf das Gesamtgewicht des Anstrichmittels enthält.

Ein großer Vorteil des erfindungsgemäßen Anstrichmittels ist darin zu sehen, dass seine elektrische Leitfähigkeit nicht durch metallische Werkstoffe sondern durch die Verwendung von kristallinem Graphit hervorgerufen wird. Die Verwendung von Graphit hat den Vorteil, dass es verglichen mit metallischen Werkstoffen ein geringeres spezifisches Gewicht aufweist. Aus diesem Grund weisen erfindungsgemäße Anstrichmittel eine hervorragende Verarbeitbarkeit auf. Darüber hinaus haben die erfindungsgemäßen Anstrichmittel ein geringes Eigengewicht, was insbesondere im Hinblick auf ihre Applikation und Transport von Vorteil ist. Schließlich weist auch die mit dem erfindungsgemäßen Anstrichmittel hergestellte Flächenheizung ein geringeres Schichtgewicht auf, was dessen Applikation auch auf Untergründen geringer Festigkeit ermöglicht und zu einer verbesserten Haftung führt.

Zweckmäßigerweise enthält das erfindungsgemäße Anstrichmittel als weitere Komponente mindestens ein Bindemittel. Aus ökologischer Sicht ist es von Vorteil, wenn dieses Bindemittel in Form einer wässrigen Dispersion vorliegt.

Diese Ausführungsform eignet sich insbesondere für den Innenbereich.

Die Menge des Bindemittels in dem erfindungsgemäßen Anstrichmittel kann in weiten Bereichen variieren. Besonders gute Ergebnisse werden erzielt, wenn das Bindemittel in einer Menge von 0,1 Gew.% bis 30 Gew.%, vorzugsweise von 1 bis 10 Gew.%, und insbesondere von 2 bis 8 Gew.%, jeweils bezogen auf den Feststoffgehalt des Anstrichmittels enthalten ist. Erfindungsgemäß besonders geeignete Bindemittel sind Kunstharz-Dispersionsbindemittel, vorzugsweise auf Basis von Acrylat, Vinylacetat, Styrol, Butadien, Phenylacetylen, Alkydharzemulsionen und/oder wässrigen Bindemittelhybriden.

Darüber hinaus hat es sich als günstig für die Eigenschaften des Anstrichmittels erwiesen, wenn es mindestens ein Verarbeitungshilfsmittel enthält. Die Menge des Verarbeitungshilfsmittels beträgt vorzugsweise von 0,1 bis 20 Gew.%, vorzugsweise von 0, 5 bis 8 Gew.% und insbesondere von 1 bis 5 Gew.%, jeweils bezogen auf die Gesamtmenge des Anstrichmittels. Erfindungsgemäß besonders geeignete Verarbeitungshilfsmittel sind Celluloseether, Polysaccharide, Schichtsilikate, Acrylat und/oder Polyurethane. Mit Hilfe der vorgenannten Verarbeitungshilfsmittel kann die Verarbeitungskonsistenz des erfindungsgemäßen Anstrichmittels besonders einfach reguliert werden.

Ferner kann das Bindemittel herkömmliche Zusatzstoffe, wie Antiabsetz- oder Antiwiederablagerungsmittel, Verdickungsmittel und/oder Benetzungsmittel enthalten.

Praktische Versuche haben ergeben, dass das erfindungsgemäße Anstrichmittel eine besonders gute Verarbeitbarkeit aufweist, wenn der Festkörpergehalt - inklusive des Anteils an kristallinem Graphit - etwa 10 bis 70 Gew.%, vorzugsweise etwa 30 bis 50 Gew.% beträgt. Als zur Einstellung des Festkörpergehalts besonders geeignet haben sich Füllstoffe auf Basis von Carbonaten, Sulfaten, Silikaten, Talkum und/oder Diatomeenerde erwiesen.

Als besonders zweckmäßig hat sich die Verwendung des erfindungsgemäßen Anstrichmittels in Form eines Spachtels erwiesen. Das erfindungsgemäße Anstrichmittel kann aber auch in jeder beliebigen anderen Form, beispielsweise als Farbe, und/oder als Klebemittel, insbesondere als Fliesenkleber, eingesetzt werden.

Das erfindungsgemäße Anstrichmittel kann auf kleine und große Oberflächen aufgetragen werden und erlaubt deren gleichförmige und einfach zu regulierende Erwärmung. Das Auftragen kann hierbei auf die gleiche Weise wie bei einem gewöhnlichen Anstrichmittel erfolgen. In Abhängigkeit von der Konsistenz des Anstrichmittels eignet sich insbesondere das Auftragen mittels Pinsel, Spritzpistole, Spachtel oder einer Beschichtungsmaschine. Das Aushärten des Anstrichmittels erfolgt am einfachsten selbsttätig an der Luft. Selbstverständlich kann das Aushärten jedoch auch durch Wärmeeinwirkung beschleunigt werden.

Überraschenderweise wurde festgestellt, dass sich auch nicht kristallines Graphit hervorragend zur Herstellung einer Flächenheizung eignet, sofern nicht kristallines Graphit mit einer Kornverteilung von bis zu 600 µm eingesetzt wird. Als besonders geeignet hat sich nicht kristallines Graphit mit einer Korngrößenverteilung D95 von 0,1 bis 80 µm, vorzugsweise von 1 bis 70 µm und insbesondere von 1 bis 60 µm erwiesen.

Das erfindungsgemäße Anstrichmittel kann zu den verschiedensten Zwecken eingesetzt werden, in denen es von Vorteil ist, eine beheizte Oberfläche zu erzeugen. Beispiele hierfür sind:
- das Unterdrücken von Feuchtigkeit in einem Gegenstand, wie beispielsweise einer Mauer;
- das Verleihen einer insektiziden Wirkung durch einen Stromdurchfluss;
- das Verleihen einer antistatischen Wirkung durch ein Stromfluss;
- das Einstellen und/oder Halten der Temperatur einer Flüssigkeit bzw. von Lebensmitteln innerhalb eines Behältnisses;
- die Vermeidung von Taupunktunterschreitungen auf Innen-Außenwänden und sonstigen Gebäudeteilen, vorwiegend auf wärmegedämmten Fassaden(-teilen).
- das Abtöten von biologischem Bewuchs durch Hitzeentwicklung;
- die Vermeidung von biologischem Befall in Innenräumen, vorwiegend in Feuchträumen.

Für das Verleihen einer antistatischen Wirkung reicht bereits eine äußerst geringe Menge an Anstrichmittel aus. Aus diesem Grund kann das erfindungsgemäße Anstrichmittel für diese Anwendung besonders zweckmäßig als Farbe eingesetzt werden.

Bei der Verwendung in Feuchträumen haben praktische Versuche gezeigt, dass es besonderes zweckmäßig ist, wenn das erfindungsgemäße Anstrichmittel in Form eines Klebemittels, insbesondere als Fliesenkleber, eingesetzt wird.

Darüber hinaus eignet sich das erfindungsgemäße Anstrichmittel hervorragend zur Herstellung eines flächigen Heizelements, insbesondere in Form einer Wand-, Decken- und/oder Fußbodenheizung.

Ein weiterer Gegenstand der Erfindung ist somit ein flächiges Heizelement, das einen Träger und eine elektrisch ableitfähige Schicht umfasst, wobei die elektrisch ableitfähige Schicht unter Verwendung eines Anstrichmittels hergestellt wurde, das kristallines Graphit enthält. Der Träger selbst ist hierbei zweckmäßigerweise elektrisch nicht leitfähig oder zumindest deutlich weniger leitfähig als die elektrisch ableitfähige Schicht. Als Träger eignen sich die verschiedensten Materialien. Erfindungsgemäß besonders geeignet ist Holz, Gips, Kunststoff und/oder Pappe.

Um die elektrischen Verluste beim Betrieb der Flächenheizung möglichst gering zu halten, ist es von Vorteil, wenn die elektrisch ableitfähige Schicht zumindest auf einer Seite von einer isolierenden Beschichtung umgeben ist. Dies kann auf einfache Weise dadurch bewirkt werden, dass ein elektrisch isolierender Träger eingesetzt wird. Ferner kann das Heizelement auch mindestens eine weitere elektrisch isolierende Beschichtung umfassen. Diese kann auf der dem Träger zu- und/oder abgewandten Seite der elektrisch ableitfähigen Schicht angeordnet werden. Vorzugsweise sind sowohl auf der dem Träger zu- als auch auf der ihm abgewandten Seite der elektrisch ableitfähigen Schicht elektrisch isolierende Beschichtungen vorgesehen. Als Material für die elektrisch isolierende Beschichtung eignen sich insbesondere Kunststoffe. Hervorragende Ergebnisse werden mit Polyester erzielt. Besonders funktionell ist es, wenn eine auf der dem Träger zugewandten Seite der elektrisch ableitfähigen Schicht angebrachte elektrische Beschichtung sowohl elektrisch als auch thermisch isolierend ist.

Um die Wärmeverluste beim Betrieb der Flächenheizung möglichst gering zu halten, ist es erfindungsgemäß bevorzugt, den Träger wärmeisolierend auszugestalten. Zu diesem Zweck ist es von Vorteil wenn der Träger bereits einen hohen eigenen Wärmewiderstand aufweist. Alternativ oder zusätzlich kann der Träger auch mit wärmeisolierenden Materialien, wie beispielsweise Mineralwolle oder Polystyrolschaum, versehen werden.

Gemäß einer weiteren bevorzugten Ausführungsform der Erfindung findet die thermische Isolierung dadurch statt, dass das flächige Heizelement eine separate thermisch isolierende Beschichtung umfasst. Diese separate thermisch isolierende Beschichtung ist zweckmäßigerweise auf der dem Träger zugewandten Seite der elektrisch ableitfähigen Schicht angeordnet.

Darüber hinaus kann das erfindungsgemäße Heizelement selbstverständlich auch weitere Schichten verschiedenster Zusammensetzung umfassen. Diese weiteren Schichten können als Zwischenschichten und/oder als äußere Schicht vorgesehen sein.

Je nach Anwendungszweck kann die äußere Schicht die verschiedensten Materialien enthalten. Erfindungsgemäß hierfür besonders geeignete Materialien sind Farben, Putz, insbesondere Kunstharzputz, Firnisse, Lacke, Laminat, Holz, Metall, Zement, Gips, Glas, Kunststoff und/oder Stein. Selbstverständlich kann auch die elektrisch ableitfähige Schicht selbst oder eine auf dieser angeordnete elektrisch isolierende Schicht die äußere Schicht bilden.

Damit der Strom während des Betriebs des Heizelements einen möglichst großen Bereich durchströmt, ist es bevorzugt, wenn in zwei räumlich um einen Abstand d voneinander beabstandeten Bereichen der elektrisch ableitfähigen Schicht bandförmige elektrische Leiter der Länge 1 vorgesehen sind. Die Parameter d und 1 sind hierbei in Abhängigkeit von der zu erzielenden Wärmeleistung zu wählen. Der spezifische Widerstand dieser bandförmigen elektrischen Leiter sollte zweckmäßigerweise niedriger als der der elektrisch ableitfähigen Schicht selbst sein.

Praktische Versuche haben ergeben, dass der Einsatz von Metallen, wie insbesondere Kupfer, Silber und/oder Aluminium als bandförmige elektrische Leiter besonders gute Ergebnisse zeigt. Besonders günstig ist es, wenn die bandförmigen elektrischen Leiter in etwa parallel zueinander angeordnet sind. Als sehr günstig hat es sich ferner erwiesen, wenn die bandförmigen elektrischen Leiter in einem möglichst großen Abstand zueinander angeordnet sind.

Ferner hat es sich als vorteilhaft erwiesen, wenn an mindestens zwei Stellen des flächigen Heizelements elektrisch leitende Verbindungselemente vorgesehen sind, die an eine Stromquelle angeschlossen werden können. Auf diese Weise kann das flächige Heizelement auf einfache Weise mit einer Stromquelle angeschlossen werden. Besonders einfach ist die Verbindung mit einer Stromquelle, wenn die leitenden Verbindungselemente als herausragende Enden der bandförmigen elektrischen Leiter ausgebildet sind.

Da das flächige Heizelement je nach Anwendung im Betrieb auf verschiedene Temperaturen erwärmt wird, ist es von Vorteil, wenn das Heizelement bis zu den jeweils vorgesehenen Temperaturen thermisch beständig ist. Praktische Anwendungen haben gezeigt, dass es günstig ist, wenn das flächige Heizelement bei Temperaturen von bis zu 100°C, vorzugsweise bis zu 130°C und insbesondere bis zu 150°C thermisch beständig ist.

Das flächige Heizelement kann je nach beabsichtigtem Anwendungszweck verschiedene Abmessungen aufweisen. Bevorzugt sind quadratische oder rechteckige Formen. Die Kantenlängen können hierbei in weiten Bereichen variieren. Bei der Auswahl geeigneter Kantenlängen sollte berücksichtigt werden, dass hierdurch auch die mit dem Heizelement erzielbare Wärmeleistung beeinflusst wird. Als besonders günstig haben sich Kantenlängen im Bereich von 20 cm bis zu 3 m, vorzugsweise 50-cm bis 2 m und insbesondere 80 cm bis 1,50 m erwiesen. Ganz besonders bevorzugt ist eine rechteckige Form mit Abmessungen von etwa 1 m auf etwa 2 m.

Die Abmessungen der elektrisch ableitfähigen Schicht richten sich nach den Trägerdimensionen und nach der angestrebten Heizleistung. Es hat sich gezeigt, dass eine besonders hohe Wärmeleistung erzielt wird, wenn die elektrisch ableitfähige Schicht eine Dicke von 0,01 mm bis 2,0 cm, vorzugsweise von 0,1 mm bis 1,0 cm und insbesondere von 0,5 mm bis 4,0 mm aufweist.

Das erfindungsgemäße flächige Heizelement kann auf einfache Weise dadurch hergestellt werden, dass das erfindungsgemäße Anstrichmittel auf einen Träger aufgebracht wird. Das Aufbringen erfolgt vorzugsweise durch Streichen oder Spachteln.

Das flächige Heizelement kann auf einfache Weise dadurch in Betrieb genommen werden, dass es an zwei voneinander beabstandeten Bereichen mit einer Stromquelle verbunden wird. Bei einer rechteckigen Grundform erfolgt die Stromzufuhr vorzugsweise an den jeweils kürzeren Seiten. Ganz besonders einfach gestaltet sich die Inbetriebnahme des flächigen Heizelements, wenn herausragende Enden der bandförmigen elektrischen Leiter als leitende Verbindungselemente ausgestaltet sind.

Um die Temperatur des flächigen Heizelements während des Betriebs zu regeln, hat es sich als besonders einfach erwiesen, das Heizelement mit einem Flächentemperaturbegrenzer (Fernfühler) einzustellen.

Im Folgenden wird die Erfindung anhand einer beispielhaften Zusammensetzung sowie zweier Figuren näher erläutert.

### Musterrezeptur:

| | |
|---|---|
| Lösungsmittel | 37,5 Gew.% |
| Additive | 3,0 Gew.% |
| Verarbeitungshilfsmittel | 1,0 Gew.% |
| Graphit | 40,0 Gew.% |
| Carbonfasern | 2,5 Gew.% |
| Carbo-Nano-Tube | 1,0 Gew.% |
| Bindemittel 50 %ig | 15,0 Gew.% |

In der Beispielzusammensetzung können als Lösungsmittel Wasser und/oder organische Lösungsmittel, als Additive Netzmittel, Dispergiermittel, Konservierungsmittel und/oder Entschäumer und als Verarbeitungshilfsmittel Cellulose-, Polyurethan-, Acrylat-Verdicker und/oder Xanthane verwendet werden. Das eingesetzte Graphit kann verschiedene Sieblinien und die eingesetzten Carbonfasern verschiedene Längen aufweisen.
Figur 1 Raman-Spektrum eines typischen amorphen Graphits
Figur 2 Raman-Spektrum eines typischen kristallinen Graphits

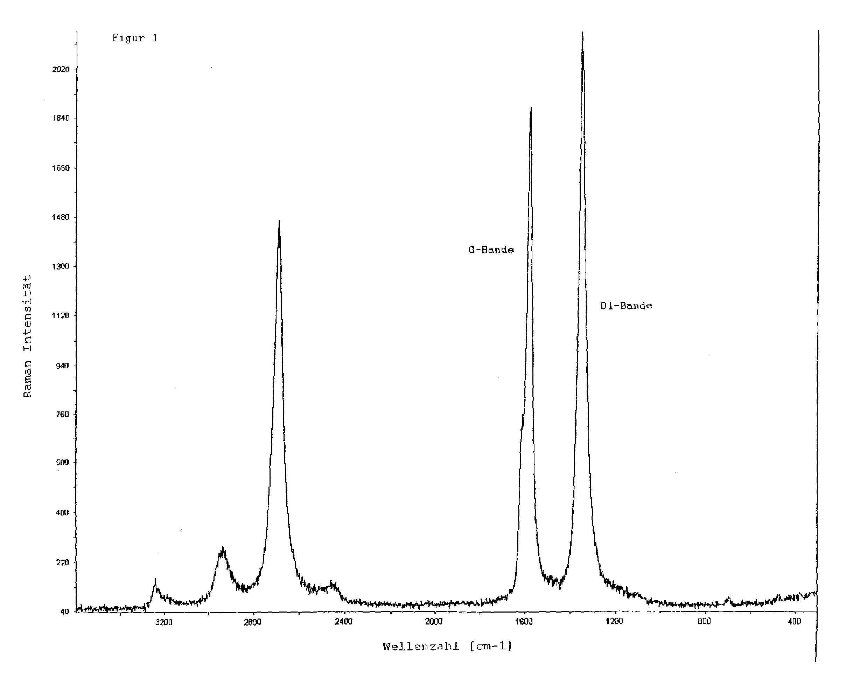

In Figur 1 wird das Raman-Spektrum eines typischen amorphen Graphits dargestellt. Das Spektrum wurde mit dem Spektrometer Horiba Jobina Yron Ram HR 800 aufgenommen. Bei der Messung wurde ein YAG-Laser (Frequenz-verdoppelt) mit einer Wellenlänge von λ=532,15 mm und einer Leistung von P = 100 mW verwendet. Die Messung erfolgte in Reflexion mit einem Objekt (Olympus BX 40) mit 50-facher Vergrößerung. Der Spektrograph besitzt ein Gitter mit 1800 g/mm. Als Detektor diente ein luftgekühlter CCD. Die Belichtungszeit während der Messung betrug 10 Sekunden. Bei dieser Gerätekombination ist eine Auflösung spektral von 1 cm⁻¹ und lateral von 1 mm möglich. Die Messung wurde an dem trockenen Graphitpulver durchgeführt.

Es zeigt sich deutlich, dass die der D1-Bande zugeordnete Intensität größer als die der G-Bande ist.

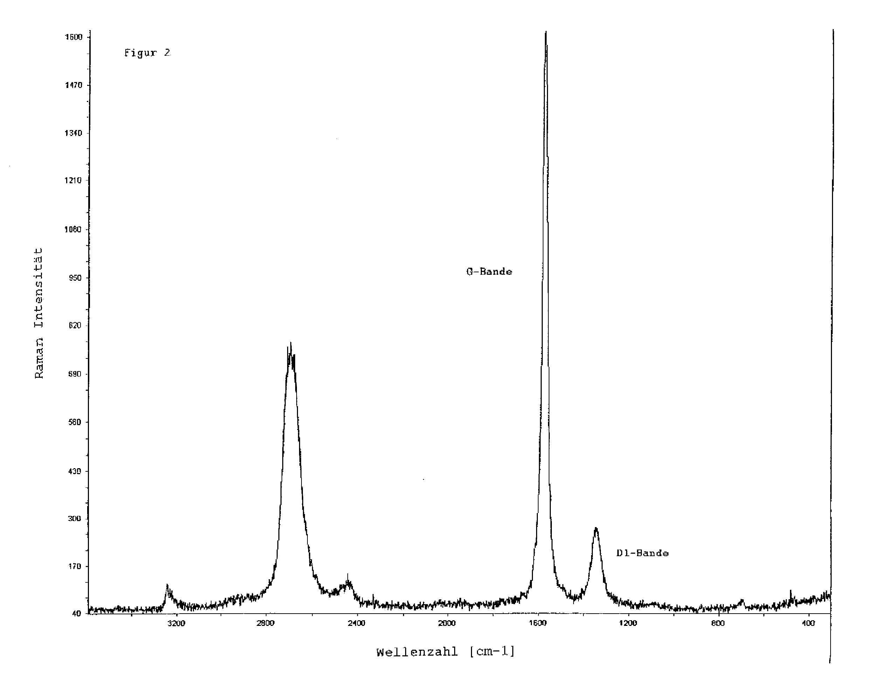

In Figur 2 wird das Raman-Spektrum eines typischen kristallinen Graphits gemessen auf einem dargestellt. Die Messbedingungen entsprechen den in Bezug auf Figur 1 diskutierten.

Es zeigt sich deutlich, dass die der D1- Bande zugeordnete Intensität geringer als die der G-Bande ist.

## Patentansprüche

1. Anstrichmittel zur Herstellung einer Flächenheizung, **dadurch gekennzeichnet, dass** das Anstrichmittel kristallines Graphit enthält.

2. Anstrichmittel nach Anspruch 1, **dadurch gekennzeichnet, dass** das kristalline Graphit einen Kohlenstoffgehalt von mehr als 80 Gew.% bis 100 Gew.%, vorzugsweise von 90 Gew.% bis 100 Gew.%, und insbesondere von 96 bis 100 Gew.% aufweist.

3. Anstrichmittel nach Anspruch 1 oder 2, **dadurch gekennzeichnet, dass** das kristalline Graphit eine Korngrößenverteilung D95 von kleiner 80 µm, vorzugsweise kleiner 70 µm und insbesondere kleiner 60 µm aufweist.

4. Anstrichmittel nach einem der Ansprüche 1 bis 3, **dadurch gekennzeichnet, dass** die Menge des kristallinen Graphits in dem Anstrichmittel 1 bis 30 Gew.%, bezogen auf das Gesamtgewicht des Anstrichmittels beträgt.

5. Anstrichmittel nach einem der Ansprüche 1 bis 4, **dadurch gekennzeichnet, dass** der spezifische Widerstand des Anstrichmittels 0,0005 bis 5 Ω x m beträgt.

6. Anstrichmittel nach einem der Ansprüche 1 bis 5, **dadurch gekennzeichnet, dass** das Anstrichmittel Kohlenstofffasern und/oder Carbon-Nano-Tubes enthält.

7. Anstrichmittel nach einem der Ansprüche 1 bis 6, **dadurch gekennzeichnet, dass** die Menge an Kohlenstofffasern und/oder Carbon-Nano-Tubes in dem Anstrichmittel bis zu 10 Gew.%, vorzugsweise von 0,1 bis 5 Gew.%, insbesondere von 0,5 bis 1 Gew.%, jeweils bezogen auf das Gesamtgewicht des Anstrichmittels beträgt.

8. Anstrichmittel nach einem der Ansprüche 1 bis 7, **dadurch gekennzeichnet, dass** das Anstrichmittel mindestens ein Bindemittel, vorzugsweise in Form einer wässrigen Dispersion, in einer Menge von 1 bis 30 Gew.% bezogen auf den Festgehalt des Anstrichmittels enthält.

9. Anstrichmittel nach Anspruch 8, **dadurch gekennzeichnet, dass** das Bindemittel ein Kunstharz-Dispersionsbindemittel, vorzugsweise auf Basis von Acrylat, Vinylacetat, Styrol, Butadien und/oder Phenylacetylen, Alkydharzemulsionen und/oder wässrigen Bindemittelhybriden ist.

10. Anstrichmittel nach einem der Ansprüche 1 bis 9, **dadurch gekennzeichnet, dass** das Anstrichmittel mindestens ein Verarbeitungshilfsmittel in einer Menge von 0,1 bis 20 Gew.%, vorzugsweise von 0, 5 bis 8 Gew.% und insbesondere von 1 bis 5 Gew.% bezogen auf das Gesamtgewicht des Anstrichmittels enthält.

11. Anstrichmittel nach Anspruch 10, **dadurch gekennzeichnet, dass** das Verarbeitungshilfsmittel Celluloseether, Polysaccharide, Schichtsilikate, Acrylat- und/oder Polyurethane enthält.

12. Anstrichmittel nach einem der Ansprüche 1 bis 11, **dadurch gekennzeichnet, dass** das Anstrichmittel Carbonate, Sulfate, Silikate, Talkum und/oder Diatomeenerde als Füllstoff enthält.

13. Verwendung eines Anstrichmittels nach einem der Ansprüche 1 bis 12 als elektrische Flächenheizung, insbesondere als Wand-, Decken und/oder Fußbodenheizung.

14. Flächiges Heizelement umfassend einen Träger und eine elektrisch ableitfähigen Schicht, **dadurch gekennzeichnet, dass** die elektrisch ableitfähigen Schicht ein Anstrichmittel nach einem der Ansprüche 1 bis 12 enthält.

15. Flächiges Heizelement nach Anspruch 14, **dadurch gekennzeichnet, dass** das Heizelement eine elektrisch isolierende Beschichtung umfasst, die auf der dem Träger zuund/oder dem Träger abgewandten Seite der elektrisch ableitfähigen Schicht angeordnet werden kann.

16. Flächiges Heizelement nach Anspruch 14 oder 15, **dadurch gekennzeichnet, dass** das Heizelement eine Wärme isolierende Beschichtung umfasst, die auf der dem Träger zugewandten Seite der elektrisch ableitfähigen Schicht angeordnet werden kann.

17. Flächiges Heizelement nach einem der Ansprüche 14 bis 16, **dadurch gekennzeichnet, dass** das Heizelement eine äußere Schicht umfasst, die auf der dem Träger abgewandten Seite der elektrisch ableitfähigen Schicht angeordnet werden kann.

18. Flächiges Heizelement nach einem der Ansprüche 14 bis 17, **dadurch gekennzeichnet, dass** die äußere Schicht Putz, insbesondere Kunstharzputz, Laminat, Holz, Metall, Stein, Zement, Gips, Glas und/oder Kunststoff enthält.

19. Flächiges Heizelement nach einem der Ansprüche 14 bis 18, **dadurch gekennzeichnet, dass** in zwei räumlich voneinander beabstandeten Bereichen der elektrisch ableitfähigen Schicht bandförmige elektrische Leiter vorgesehen sind.

20. Flächiges Heizelement nach einem der Ansprüche 14 bis 19, **dadurch gekennzeichnet, dass** an mindestens zwei Stellen des flächigen Heizelements elektrisch leitende Verbindungselemente vorgesehen sind, die an eine Stromquelle angeschlossen werden können.

21. Verfahren zum Herstellen eines flächigen Heizelements nach einem der Ansprüche 14 bis 20, **dadurch gekennzeichnet, dass** ein Anstrichmittel nach einem der Ansprüche 1 bis 13 auf einen Träger aufgebracht wird.
